# DEMANDE DE BREVET EUROPEEN

(11) **EP 4 497 571 A1**
(43) Date de publication de la demande: **29.01.2025**
(21) Numéro de dépôt: 24191112.2
(22) Date de dépôt: 26.07.2024
(51) Int. Cl.: B29C 64/118, B22F 12/86, B29C 64/379, B29C 64/393, B33Y 30/00, B33Y 40/00

(54) **MACHINE MODULAIRE DE FABRICATION PAR ADDITION, SOUSTRACTION OU TRANSFORMATION DE MATIERE**

(30) Priorité: 28.07.2023 FR 2308168
(71) Demandeur: 3D Synergie, 31670 Labège (FR)
(72) Inventeur: TRESSIERES COMTAT, Simon, 31670 LABEGE (FR); SANTOS GUTIERREZ, Leonardo Mario, 31670 LABEGE (FR)
(74) Mandataire: Plasseraud IP

(57) **Abrégé**

Il est décrit une machine modulaire (1) pour la fabrication d'objets, comprenant :
- un bâti (20),
- un plateau de support (24),
- au moins un module de fabrication (10) comprenant une station d'accueil (11) et une tête de fabrication (12) amovible par rapport à la station d'accueil,
- un dispositif de déplacement (30) d'une tête de fabrication relativement au plateau de support, et
- un contrôleur principal (41), configuré pour commander le dispositif de déplacement,

chaque station d'accueil de module de fabrication comprenant un contrôleur secondaire (110), le bâti comprenant une pluralité d'emplacements (25) pour des modules de fabrication,
et chaque station d'accueil et chaque emplacement sont configurés pour permettre le montage d'une station d'accueil de manière amovible dans un emplacement du bâti en établissant une communication entre le contrôleur secondaire et le contrôleur principal lorsque la station d'accueil est montée dans un emplacement du bâti.

## Description

### Domaine technique

La présente divulgation concerne une machine modulaire de fabrication par addition, soustraction ou transformation de matière, pouvant en particulier comprendre un ou plusieurs modules d'impression en trois dimensions par dépôt de fil fondu.

### Technique antérieure

Il est connu de fabriquer des objets par impression 3D (ou fabrication additive), notamment par la technologie du dépôt de fil fondu, également nommé FDM (acronyme anglais de « Fused Déposition Modelling »). Une machine d'impression 3D par dépôt de fil fondu comprend classiquement un châssis comprenant un emplacement pour une bobine de filament à déposer, un plateau de support d'un objet à fabriquer, et une buse chauffante mobile par rapport au plateau de support, dans laquelle est alimenté du filament déroulé de la bobine. La buse chauffante permet de déposer le filament fondu en couches successives pour former l'objet à fabriquer. Un contrôleur permet de commander le déplacement de la buse, également le chauffage, les moyens d'entrainement du filament etc.

Un inconvénient lié à ce type de machine est qu'elle comprend en général une à deux bobines et buses associées, ce qui limite la diversité des pièces possibles, puisqu'il peut être nécessaire de changer de bobine en cours de fabrication pour pouvoir imprimer des pièces de différentes couleurs, voire de changer une buse associée à une bobine pour pouvoir imprimer selon une largeur d'impression voulue, car cette largeur d'impression est déterminée par la buse qui présente en général une section de diamètre constant.

De plus, pour pouvoir fabriquer des objets complexes, impliquant des tâches complémentaires d'insertion de composants, de gravure, etc., il est nécessaire de disposer d'une autre machine pour procéder à ces étapes complémentaires.

On connaît du document US 11 707 889 un système de fabrication modulaire comprenant un logement, une plate-forme de fabrication disposée dans le logement, et une grille modulaire pour réaliser des connexions de puissance et des connexions réseau, positionnée le long des parois du logement modulaire.

### Résumé

La présente divulgation vient améliorer la situation.

En particulier, un but de la présente divulgation est de proposer une machine modulaire de fabrication d'objets, offrant une diversité d'outils pour une fabrication plus simple et plus rapide d'objets, éventuellement complexes.

Un autre but de la présente divulgation est de proposer une machine pouvant inclure un ou plusieurs modules d'impression par dépôt de fil fondu.

Un autre but de la présente divulgation est de proposer une machine dont la configuration des modules peut être modifiée simplement.

Il est proposé une machine modulaire pour la fabrication d'objets par addition, soustraction ou transformation de matière, comprenant :
- un bâti,
- un plateau de support d'un objet à fabriquer,
- au moins un module de fabrication, chaque module de fabrication comprenant une station d'accueil et une tête de fabrication amovible par rapport à la station d'accueil,
- un dispositif de déplacement d'une tête de fabrication relativement au plateau de support, et
- un contrôleur principal, configuré pour commander le dispositif de déplacement,
caractérisée en ce que chaque station d'accueil de module de fabrication comprend un contrôleur secondaire, le bâti comprend une pluralité d'emplacements pour des modules de fabrication, et en ce que chaque station d'accueil de module et chaque emplacement comprend des connecteurs mécanique et électrique adaptés pour permettre le montage d'une station d'accueil de manière amovible dans l'un quelconque des emplacements du bâti, et pour établir une communication entre le contrôleur secondaire de la station d'accueil et le contrôleur principal lorsque la station d'accueil est montée dans un emplacement du bâti.

Dans des modes de réalisation, chaque station d'accueil d'un module de fabrication comprend une mémoire stockant des informations de configuration du module de fabrication, et le contrôleur secondaire est configuré pour transmettre lesdites informations de configuration au contrôleur principal lors d'une phase d'initialisation du module de fabrication.

Dans des modes de réalisation, chaque station d'accueil comprend un capteur de présence de la tête de fabrication amovible, et le contrôleur secondaire est configuré pour communiquer un état de présence ou d'absence de la tête de fabrication amovible au contrôleur principal.

Dans des modes de réalisation, le dispositif de déplacement comprend un chariot mobile dans un plan parallèle au plateau de support, le chariot comprenant des moyens de connexion mécanique et électrique avec une tête de fabrication, un moteur, et un crabot entrainé par le moteur.

Dans des modes de réalisation, la machine comprend deux alignements d'emplacements des modules de fabrication, disposés parallèlement l'un à l'autre, de part et d'autre du plateau de support de l'objet à fabriquer.

Dans des modes de réalisation, le dispositif de déplacement d'une tête de fabrication comprend un bras mobile en translation dans une direction parallèle aux alignements des emplacements des modules, et un chariot mobile en translation dans le bras, dans une direction perpendiculaire à la direction de déplacement du bras, le chariot comprenant des moyens de préhension amovible d'une tête de fabrication d'un module, disposés de part et d'autre du chariot dans sa direction de déplacement.

Dans des modes de réalisation, le dispositif de déplacement d'une tête de fabrication comprend un chariot mobile dans un plan parallèle au plateau de support, et au moins une courroie de déplacement du chariot mobile définissant un contour fermé, et les emplacements pour les modules de fabrication sont situés à l'intérieur du contour défini par la courroie.

Dans des modes de réalisation, le dispositif de déplacement comprend deux courroies de déplacement superposées se déplaçant dans des sens opposés.

Dans des modes de réalisation, la machine comprend une pièce de support des emplacements de modules comprenant les connecteurs mécaniques et électriques d'une pluralité d'emplacements de modules, une carte électronique sur laquelle sont montés les connecteurs électriques, et un logement pour le passage de chaque courroie.

Dans des modes de réalisation, la machine comprend au moins un module d'impression par dépôt de fil fondu, dont la station d'accueil est configurée pour alimenter la tête en filament, et la tête comprend un dispositif de chauffage du fil, et une buse de dépôt.

Dans des modes de réalisation, la tête du module d'impression par dépôt de fil fondu comprend en outre un mécanisme d'entrainement apte à être entrainé par le moteur du chariot par l'intermédiaire d'un crabot, quand le chariot est connecté à la tête.

Dans des modes de réalisation, le bâti comprend un support de bobine et un bac de récupération de fil disposé sous chaque emplacement de module de fabrication.

Dans des modes de réalisation, le contrôleur secondaire de la station d'accueil du module d'impression par dépôt de fil fondu est configuré pour transmettre au contrôleur principal une information relative à une longueur de filament consommée et/ou une alerte relative à un évènement de type rupture ou absence de filament.

Dans des modes de réalisation, le contrôleur principal est configuré pour commander la mise en oeuvre d'une séquence de fabrication impliquant le fonctionnement, successivement, d'un premier module de fabrication et du module d'impression par dépôt de fil fondu, et la station d'accueil du module d'impression par dépôt de fil fondu est en outre configurée, à réception d'instructions du contrôleur principal, pour préchauffer et précharger en filament la tête d'impression, pendant le fonctionnement du premier module de fabrication.

Dans des modes de réalisation, la machine comprend en outre au moins un module de fabrication parmi le groupe suivant :
- Module d'écriture,
- Module de fraisage
- Module de dépôt liquide,
- Module de découpe,
- Module laser,
- Module de préhension et de dépôt,
- Module d'injection de matière,
- Module de mesure dimensionnel,
- Module de gravure,
- Module de lissage,
- Module de dépôt à fibres continues,
- Module de dépôt et polymérisation de résine.

Selon un autre objet, il est décrit un module de fabrication ou de contrôle adapté pour être utilisé dans une machine selon la description qui précède, le module de fabrication comprenant une station d'accueil et une tête de fabrication amovible par rapport à la station d'accueil, dans lequel la station d'accueil comprend un contrôleur, et comprend des moyens de connexion, par exemple des connecteurs électrique et mécanique, adaptés pour permettre son montage sur le bâti de la machine de façon amovible.

Dans des modes de réalisation la station d'accueil et la tête de fabrication comprennent des moyens d'accouplement électromagnétique commandés, et des moyens de connexions électrique.

Dans des modes de réalisation, la station d'accueil comprend un moteur et un organe de couplage avec un axe de sortie du moteur, et la tête de fabrication comprend des pièces mécaniques mobiles et un organe de couplage adapté pour coopérer avec l'organe de couplage de la station d'accueil et pour entrainer en mouvement les pièces mécaniques mobiles une fois le couplage réalisé.

Dans des modes de réalisation, le module est un module d'impression par dépôt de fil fondu, dans lequel la station d'accueil est configurée pour alimenter la tête en filament, et la tête comprend un dispositif de chauffage du filament et une buse de dépôt.

Dans des modes de réalisation, la station d'accueil comprend en outre au moins un capteur adapté pour détecter une rupture ou une absence de filament, et/ou pour mesurer une longueur de filament consommée.

La machine proposée comprend un ou plusieurs modules de fabrication, chaque module comprenant une station d'accueil montée amovible sur un emplacement dédié à cet effet du bâti de la machine. L'emplacement et la station d'accueil étant pourvus de connecteurs électriques, et la station d'accueil comprenant un contrôleur propre, le montage d'un module sur le bâti permet de mettre en communication le contrôleur de la station d'accueil avec le contrôleur principal de la machine. Grâce à cette communication, le contrôleur principal peut connaître la configuration de la machine (nombre de modules, fonction de chaque module, paramétrage associé à chaque module) et gérer le fonctionnement de la machine en conséquence.

Chaque station d'accueil peut également comprendre un capteur de présence de la tête d'outil associée, et communiquer l'état présent ou absent de la tête d'outil au contrôleur principal. Chaque station d'accueil peut également comprendre des fonctionnalités supplémentaires qui peuvent dépendre de la nature de l'outil de fabrication formé par le module. Ainsi, une station d'accueil d'un module d'impression par dépôt de fil fondu peut également comprendre des fonctionnalités d'amorçage et de contrôle de la présence de filament, et de mesure de la quantité de filament utilisée.

La configuration mécanique de la machine est également adaptée à son caractère modulaire. Ainsi, dans des modes de réalisation, les emplacements pour les modules sont alignés selon deux alignements disposés de part et d'autre du plateau de support. Le dispositif de déplacement d'une tête de module comprend un chariot mobile entre les alignements, et qui comprend de façon symétrique des moyens de connexion amovible à une tête de module pour pouvoir se connecter avec des têtes de chacun des alignements. Le déplacement du chariot est réalisé par au moins une courroie délimitant un circuit fermé, à l'intérieur duquel se trouvent les emplacements des modules, de sorte que le déplacement des têtes de fabrication ne soit pas gêné par la circulation des courroies.

### Brève description des dessins

D'autres caractéristiques, détails et avantages apparaîtront à la lecture de la description détaillée ci-après, et à l'analyse des dessins annexés, sur lesquels :
**Fig. 1**

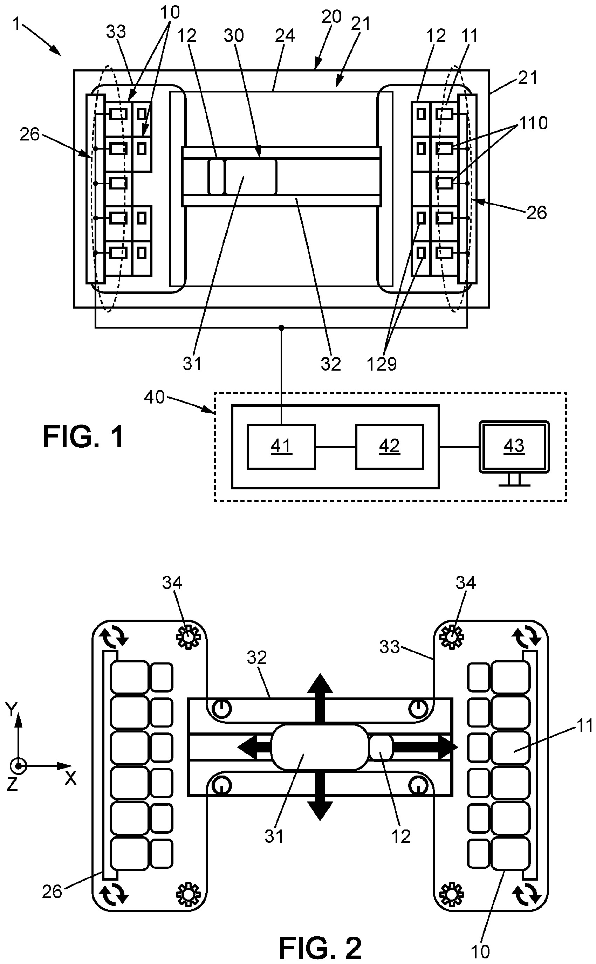

   [Fig. 1] représente schématiquement un exemple de machine modulaire selon un mode de réalisation.
**Fig. 2**
   [Fig. 2] montre schématiquement un exemple d'arrangement d'un dispositif de déplacement d'une tête de fabrication et d'emplacements de modules de fabrication selon un mode de réalisation.
**Fig. 3**

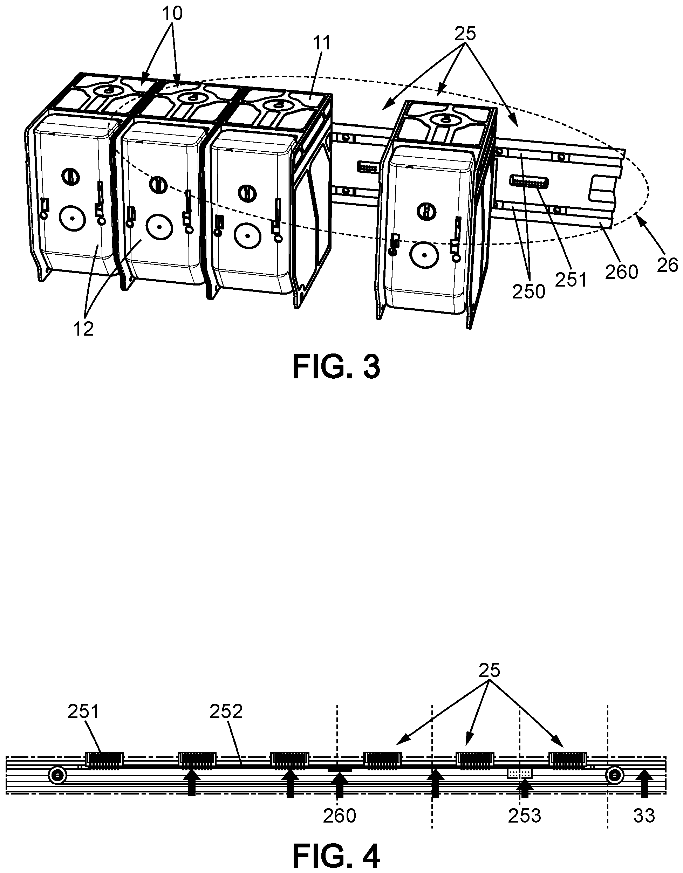

   [Fig. 3] montre un exemple de pièce support portant une pluralité de modules de fabrication.
**Fig. 4**
   [Fig. 4] représente une vue de dessus, en coupe, d'un exemple de pièce support d'emplacements de modules.
**Fig. 5**

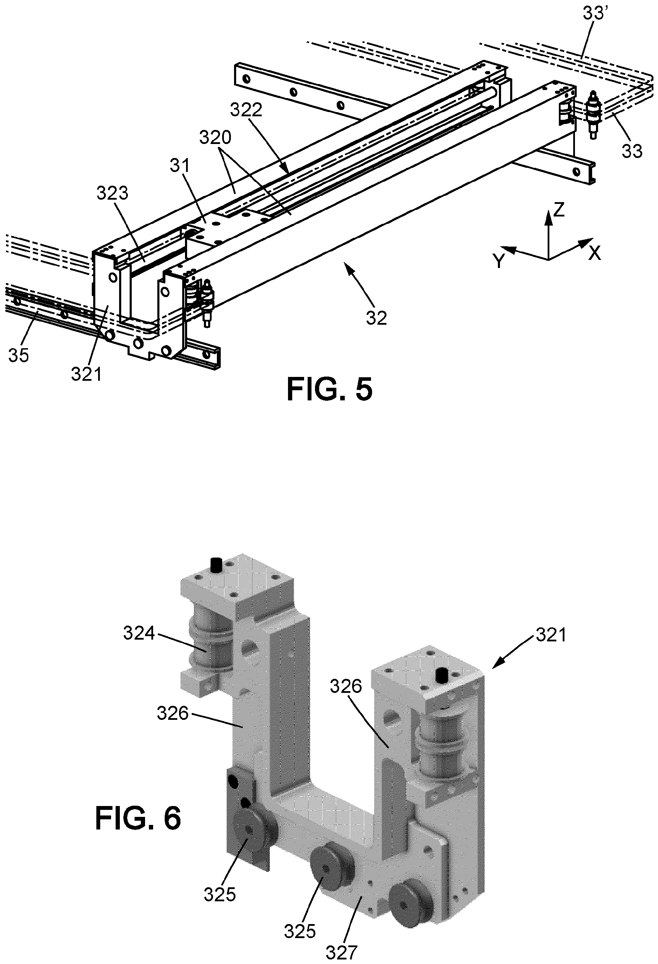

   [Fig. 5] représente un exemple de bras mobile d'un dispositif de déplacement d'une tête de fabrication.
**Fig. 6**
   [Fig. 6] représente un exemple de pièce d'extrémité d'un bras mobile.
**Fig. 7**

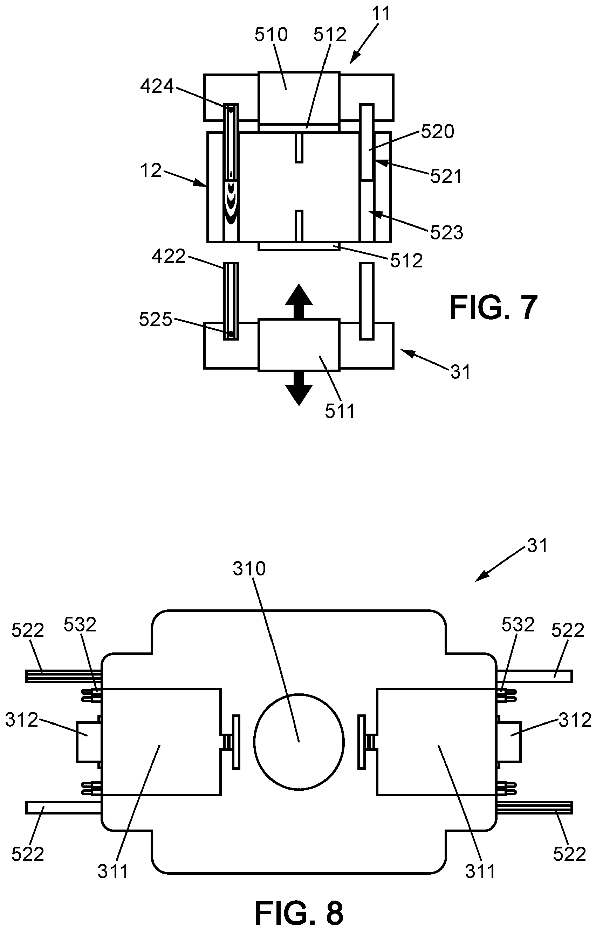

   [Fig. 7] représente schématiquement, en vue de dessus, des moyens de couplage et d'alignement entre une station d'accueil d'un module de fabrication, une tête de fabrication et un chariot mobile d'un dispositif de déplacement de la tête de fabrication selon un mode de réalisation.
**Fig. 8**
   [Fig. 8] représente schématiquement, en vue de dessus, un exemple de chariot mobile d'un dispositif de déplacement selon un mode de réalisation.
**Fig. 9**

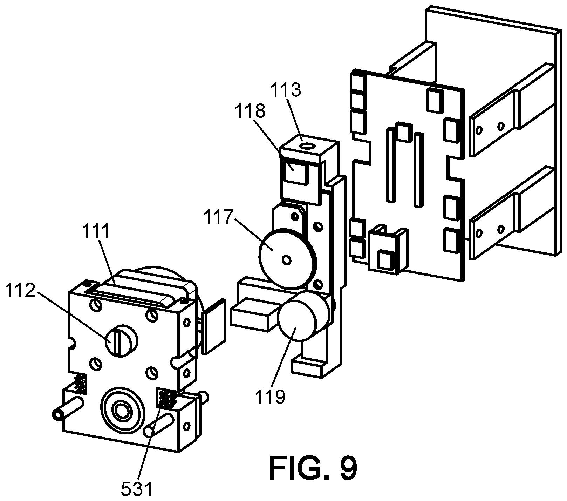

   Fig. 9 représente une vue éclatée, sans capot, d'une station d'accueil d'un module d'impression par dépôt de fil fondu selon un mode de réalisation.
**Fig. 10**

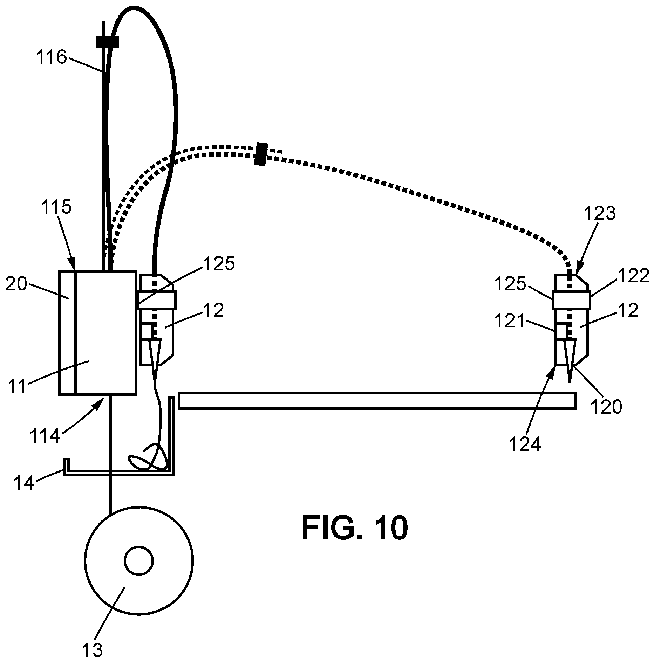

   [Fig. 10] représente schématiquement la disposition d'un module de fabrication par dépôt de fil fondu selon un mode de réalisation.
**Fig. 11**

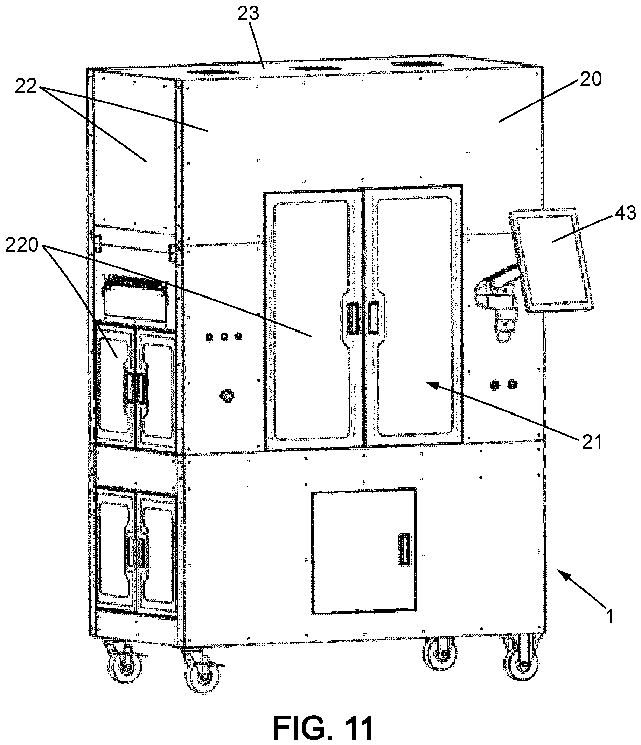

   [Fig. 11] représente une vue d'une machine modulaire de fabrication selon un mode de réalisation.

### Description détaillée d'au moins un mode de réalisation

En référence aux figures 1, 2 et 11, on va maintenant décrire des modes de réalisation d'une machine 1 modulaire pour la fabrication d'objets par addition, soustraction ou transformation de matière.

La machine peut comprendre une pluralité de modules 10 de fabrication différents, pour réaliser différents types d'opérations sur un objet à fabriquer, les modules de fabrication pouvant être utilisés à des instants différents pour réaliser des étapes successives de la fabrication d'un même objet. En particulier, et comme décrit plus en détails ci-après, la machine peut comprendre un ou plusieurs modules d'impression par dépôt de fil fondu. Dans le cas où elle en comprend plusieurs, les différents modules peuvent correspondre à des couleurs et/ou des matières et/ou des diamètres de filament déposés différents.

En alternative ou en complément, la machine 1 peut comprendre un ou plusieurs modules de fabrication 10 de différentes natures. Par exemple, la machine peut comprendre un ou plusieurs parmi les modules listés ci-après :
- module d'écriture,
- module de fraisage,
- module de dépôt liquide,
- module de découpe,
- module laser,
- module de préhension et de dépôt, par exemple pour positionner un insert dans une pièce en cours de fabrication,
- module de mesure dimensionnel, par exemple de mesure bidimensionnel ou tridimensionnel,
- module de gravure, comprenant par exemple une pointe à graver en diamant,
- Module de lissage, par exemple pour lisser des surfaces plastiques,
- Module de dépôt à fibres continues, par exemple adapté pour réaliser un dépôt composite de fil fondu autour d'un fil continu non-fondu,
- Module de dépôt et polymérisation de résine.

On comprend de la liste qui précède que le terme « module de fabrication » inclut aussi des modules intervenant au cours de la fabrication d'une pièce pour effectuer des opérations de contrôle sur la pièce, sans nécessairement réaliser d'opération de fabrication par addition, soustraction ou transformation de matière sur cette pièce. Ces modules, par exemple module de mesure dimensionnel, sont donc des modules de contrôle intervenant au cours de la fabrication de la pièce, et sont dans la suite également désignés sous le terme générique « module de fabrication ». Dans le cas spécifique d'un module de contrôle, la tête de fabrication évoquée ci-après correspond donc à une tête de contrôle (pouvant par exemple porter le capteur mis en oeuvre pour le contrôle).

En référence aux figures 1 et 11, la machine 1 comprend un bâti 20, le bâti pouvant par exemple comprendre une enceinte 21 parallélépipédique délimitée au moins par des parois périphériques 22 et une paroi supérieure 23, permettant de protéger le contenu de l'enceinte, c'est-à-dire les composants de la machine et la pièce en cours de fabrication, de contaminations extérieures et permettant également d'assurer la sécurité des opérateurs. Au moins l'une des parois périphériques peut comprendre au moins une ouverture 220 permettant l'accès à l'intérieur de l'enceinte 21 par un opérateur pour la maintenance, le nettoyage, le changement des modules, le cas échéant des bobines de filament pour de l'impression par dépôt de fil fondu, le retrait des chutes de filament et la manipulation et/ou le retrait de la pièce à fabriquer, etc..

La machine 1 comprend également un plateau de support 24 d'une pièce à fabriquer, ce plateau pouvant être de forme rectangulaire et étant avantageusement mobile en translation sur un axe z perpendiculaire au plan du plateau. Dans ce cas, le plateau de support 24 est monté en translation sur une plaque rigide (non représentée). Dans des modes de réalisation, le plateau de support 24 peut être chauffant. Le cas échéant, il peut comprendre deux plaques métalliques, par exemple en aluminium, entre lesquelles est positionné un élément chauffant, par exemple une résistance. Sur ces deux plaques métalliques est fixée une plaque supplémentaire formant la surface de travail sur laquelle la pièce est posée. Le plateau de support 24 peut également comprendre, en périphérie de la surface de travail, un ou plusieurs règles comprenant des motifs ou des indentations permettant de former des repères pour des opérations de calibrage, de contrôle et/ou de fabrication. La plaque formant la surface de travail du plateau de support 24 peut être réalisé en verre ou en métal, par exemple en acier, éventuellement recouverte d'un polymère thermoplastique tel qu'un polyétherimide (PEI) dans le cas d'impression par dépôt de fil fondu, pour assurer une bonne résistance à la chaleur.

Comme décrit plus en détails ci-après, et comme visible par exemple sur la figure 3, chaque module de fabrication 10 comprend une station d'accueil 11, qui est montée sur un emplacement du bâti prévu à cet effet, et une tête de fabrication 12 qui est amovible par rapport à la station d'accueil. La machine 1 modulaire comprend en outre un dispositif de déplacement 30 d'une tête de fabrication 12 d'un module 10 de fabrication relativement au plateau de support. Comme détaillé ci-après, le dispositif de déplacement 30 est adapté pour venir récupérer une tête de fabrication d'un module de fabrication 10 dans sa station d'accueil 11, pour le déplacer relativement au plateau de support afin de procéder à une étape de fabrication ou de contrôle d'une pièce, puis venir le replacer dans la station d'accueil 11 du module.

La machine 1 comprend également un contrôleur principal 41, configuré pour superviser le fonctionnement de la machine, afin de réaliser une pièce à fabriquer selon une séquence d'étapes de fabrication déterminée.

Dans des modes de réalisation, la machine 1 comprend un ordinateur 40, qui peut être colocalisé avec la machine 1, ou être distant de la machine et connecté à celle-ci via un réseau de communication tel qu'internet ou un intranet. L'ordinateur 40 comprend un ou plusieurs processeurs formant le contrôleur principal 41, une ou plusieurs mémoires 42, incluant une mémoire non volatile stockant des instructions de code exécutées par le contrôleur principal 41 pour la commande du fonctionnement de la machine 1. En particulier, le contrôleur principal 41 est configuré pour récupérer et exécuter des fichiers informatiques de commande de fabrication d'une pièce, par exemple des fichiers au format gcode.

L'ordinateur peut également comprendre au moins une interface utilisateur 43 permettant de recevoir des instructions d'un opérateur et/ou d'afficher, sur une interface graphique, des informations relatives au fonctionnement de la machine (étape de fabrication, statut de la machine, indication d'une panne, etc.). L'interface utilisateur 43 peut ainsi comprendre un ou plusieurs parmi un écran tactile, un écran non tactile, une souris, un clavier, des boutons de commande, etc.

L'interface utilisateur 43 permet ainsi à un utilisateur de sélectionner et exécuter un fichier informatique de commande de fabrication, de piloter manuellement, hors fabrication d'une pièce, le dispositif de déplacement 30 de la machine, de configurer certains paramètres, etc.

La machine 1 étant modulaire, elle peut comprendre un ou plusieurs modules de fabrication 10, selon une configuration variable dans le temps, c'est-à-dire que le nombre et la nature des modules de fabrication installés dans la machine à un instant donné peut être modifié en fonction des besoins, par exemple en fonction des spécifications de la pièce à fabriquer.

A cet égard, le bâti de la machine comprend une pluralité d'emplacements 25 pour des modules de fabrication, le nombre et la position des emplacements pouvant quant à eux être fixes. Avantageusement, le bâti comprend au moins 2 emplacements de module, par exemple entre 2 et 20 emplacements, par exemple 10 ou 12 emplacements. La machine 1 permet donc d'utiliser un nombre d'outils différents égal au nombre d'emplacements pour la fabrication d'une même pièce, en permettant un changement d'outil rapide au cours de la fabrication. De plus, pour les modules d'impression par dépôt de fil fondu, disposer d'un nombre important de têtes d'impression 12 permet d'améliorer les possibilités et les performances de la machine. En effet, non seulement le nombre de matériaux ou de couleurs disponibles pour une même pièce est accru, mais l'utilisation de têtes d'impression avec des diamètres de buses adaptés permet de réduire significativement le temps de fabrication. L'impression 3D étant une impression en volume, le fait de doubler le diamètre de la buse permet de multiplier par 8 la vitesse d'impression. Les buses des têtes d'impression peuvent présenter un diamètre allant par exemple de 0,25 à 2 mm. Le temps de changement d'outil étant de l'ordre de quelques secondes, les gains de vitesses obtenus compensent largement le temps passé pour le changement d'outil.

Chaque emplacement 25 comprend des connecteurs mécaniques et électrique adaptés pour coopérer avec des connecteurs mécaniques 250 et électrique 251 d'une station d'accueil d'un module de fabrication de façon amovible de manière à monter une station d'accueil d'un module sur un emplacement de façon amovible, en réalisant une connexion électrique entre la station d'accueil et le bâti lors de sa mise en place. Les connecteurs électriques sont quant à eux reliés au contrôleur principal 41 de la machine. Par « connecteur mécanique », on entend tout moyen de connexion permettant de monter la station d'accueil de façon amovible sur le bâti, y compris, le cas échéant, par des moyens magnétiques.

De plus, chaque station d'accueil 11 comprend un contrôleur secondaire 110, par exemple de type microprocesseur ou microcontrôleur, permettant, lors de la connexion d'une station d'accueil sur un emplacement du bâti, qu'une communication soit établie entre le contrôleur secondaire 110 d'une station d'accueil et le contrôleur principal 41 de la machine.

Chaque station d'accueil 11 comprend avantageusement une mémoire (non représentée), par exemple une mémoire non volatile de type ROM, par exemple de type EEPROM, stockant des informations de configuration du module de fabrication (identifiant du module, type de module, paramètres du module, etc.), et pour stocker des instructions de code exécutées par le contrôleur secondaire 110.

Ainsi, lors du montage d'un module de fabrication 10 sur un emplacement du bâti, le contrôleur secondaire 110 et le contrôleur principal 41 sont configurés pour mettre en oeuvre une phase d'initialisation lors de laquelle le contrôleur principal 41 détecte automatiquement la présence d'un module de fabrication 10 sur un emplacement 25 déterminé, et reçoit des informations de configuration du module de fabrication transmises par le contrôleur secondaire 110 du module. Le contrôleur principal 41 est également adapté pour réaliser une calibration automatique en fonction notamment des informations de configuration reçues. Ainsi, la configuration exacte de la machine, à savoir le nombre, la disposition et le type de chaque module, est connue à chaque instant du contrôleur principal 41.

Chaque station d'accueil 11 peut également comprendre un capteur de présence (non représenté) de la tête de fabrication amovible 12, et le contrôleur secondaire 110 est alors configuré pour communiquer au contrôleur principal 41 un état de présence ou d'absence de la tête de fabrication 12.

En référence aux figures 3 et 4, on va décrire plus en détails les emplacements 25 du bâti 20 pour les modules de fabrication 10. Le bâti 20 de la machine peut comprendre un ou plusieurs alignements d'emplacements 26 disposés côte à côte, chaque alignement comprenant par exemple entre 2 et 10 emplacements pour des modules. Dans un mode de réalisation représenté par exemple sur la figure 2, la machine 1 peut comprendre deux alignements 26 d'emplacements 25 de modules 10, disposés parallèlement l'un à l'autre, de part et d'autre du plateau de support de l'objet à fabriquer. Ceci permet d'utiliser une configuration symétrique de la machine et du dispositif de déplacement 30, qui est détaillée par la suite. Alternativement, la machine 1 peut comprendre un alignement d'emplacements 26 situé sur une paroi périphérique de la machine, et en particulier une paroi de fond opposée à une paroi par laquelle un opérateur peut accéder à l'enceinte de la machine.

Dans des modes de réalisation, les emplacements sont réalisés sur une pièce de support 260 solidaire du bâti, qui peut être un profilé ou une pièce formée. Cette pièce comprend avantageusement les connecteurs mécaniques 250 et électriques 251 de chaque emplacement, qui sont donc disposés régulièrement sur la longueur de la pièce, et un logement dans lequel est montée une carte électronique 252, par exemple un circuit imprimé, sur laquelle les connecteurs électriques 251 sont montées, la carte électronique 252 comprenant en outre au moins un connecteur supplémentaire 253 pour établir une connexion avec le contrôleur principal 41. Les connecteurs électriques 252 des emplacements et des stations d'accueil sont configurés pour assurer la communication entre la station d'accueil et le contrôleur principal et également pour réaliser l'alimentation électrique de la station d'accueil, et le cas échéant de la tête de fabrication lorsqu'elle est montée dans la station. Les connecteurs électriques sont avantageusement des connecteurs à broches, dépourvus de fils, pour une simplification structurelle de la machine. Il peut s'agir typiquement de connecteurs à ressorts.

Chaque emplacement 25 comprend de préférence au moins deux connecteurs mécaniques 250 adaptés pour coopérer avec des connecteurs complémentaires d'une station d'accueil. Les connecteurs mécaniques sont par exemple configurés pour permettre une connexion mécanique, par exemple par encliquetage ou guidage dans des logements dédiés suivi d'une fixation par vis.

Dans des modes de réalisation, et comme représenté par exemple sur la figure 2, le dispositif de déplacement 30 comprend un chariot mobile 31 dans un plan parallèle au plateau de support 24. Le déplacement du chariot mobile est commandé selon deux axes perpendiculaires notés X et Y, ces deux axes étant parallèles au plan du plateau de support 24.

En référence à la figure 5, pour opérer le déplacement du chariot 31, le dispositif 30 de déplacement peut comprendre un bras 32, mobile en translation dans une direction Y parallèle à l'alignement ou aux alignements des modules, le bras 32 s'étendant selon une direction X perpendiculaire à Y, et le chariot 31 étant monté mobile en translation dans le bras 32 selon cette direction X.

De plus, le dispositif 30 de déplacement comprend au moins une courroie 33 sur laquelle est monté le chariot 31, et des moteurs 34 adaptés pour entrainer la courroie en mouvement. Avantageusement, la courroie 33 forme un contour fermé à l'intérieur duquel sont situés les emplacements 25 des modules de fabrication, ce qui permet au chariot mobile 31 d'accéder facilement à la tête 12 de fabrication d'un module 10 pour venir la récupérer et la déposer. La courroie passe également par des logements prévus à cet effet dans le bras 32 de déplacement du chariot. En référence à la figure 5, le bras 32 de déplacement du chariot peut comprendre deux pièces longitudinales 320 symétriques reliées entre elles par des pièces d'extrémité 321. Les pièces longitudinales 320 sont espacées entre elles d'un intervalle permettant de positionner et d'y déplacer le chariot mobile 31, et chaque pièce 320 comprend un logement longitudinal 322 pour une portion de la courroie. Dans des modes de réalisation, le chariot mobile 31 est monté en glissière sur des tiges longitudinales 323 portées par chaque pièce longitudinale.

En référence à la figure 6, les pièces d'extrémité 321 peuvent porter des poulies de guidage 324 des courroies, et éventuellement des galets 325 leur permettant d'être montées sur des rails 35 prévus à cet effet, afin de réaliser le déplacement du bras dans la direction Y. Les pièces d'extrémité 321 présentent avantageusement une forme en U, comprenant deux montants 326 reliés respectivement à chaque pièce longitudinale, et séparés l'un de l'autre par un intervalle suffisamment large pour laisser passer le chariot et une tête 12 d'un module de fabrication. Les pièces d'extrémité 321 sont ainsi avantageusement dimensionnées de sorte que l'intervalle entre les montants 326 soit supérieur à la dimension d'une tête de module de fabrication. Les montants 326 sont reliés par une base 327 qui est montée coulissante dans un rail respectif 35 et peut comporter à cet effet les galets 325.

Comme représenté schématiquement sur la figure 2, dans les modes de réalisation dans lesquels la machine 1 comprend deux alignements 26 d'emplacements 25 de modules, de part et d'autre du plateau support 24, et le contour formé par la courroie 33 passe autour de ces alignements puis dans le bras 32, le contour ainsi formé par la courroie 33 présente un profil en H.

Dans des modes de réalisation, et comme représenté par exemple sur la figure 5, le dispositif de déplacement comprend en réalité deux courroies 33, 33' superposées l'une au-dessus de l'autre dans la direction Z, ces deux courroies se déplaçant dans des sens opposés. La motorisation est avantageusement assurée par quatre moteurs 34 pas à pas répartis à deux moteurs par courroie. Cette configuration permet d'augmenter le couple moteur total disponible pour les déplacements, et ainsi avoir des gains en vitesse et en accélération significatifs, de mieux répartir les efforts sur les courroies et d'autoriser l'utilisation de courroies souples à petits pas, et de globalement mieux équilibrer les forces qui s'exercent sur les parties mobiles, à savoir le bras mobile 32 et le chariot 31.

Afin de réaliser un calibrage de la position à zéro, selon l'axe X, du chariot 31, celui-ci peut être équipé d'un capteur de fin de course. Par exemple, le capteur de fin de course peut être un capteur optique (non représenté. Sur le bras mobile 30, un repère peut être disposé pour venir occulter ce capteur lorsque le chariot est dans la zone des X positifs. La transition entre état masqué et non masqué du capteur permet d'identifier la position du zéro sur l'axe X. L'état du capteur lors de la commande de mise à zéro indique le sens de déplacement pour trouver le zéro, un état non masqué indiquant une valeur de X négative, donc un déplacement visant à incrémenter X, et un état masqué une position positive qui implique un déplacement inverse.

Le chariot 31 peut en outre comprendre un capteur d'images 310 tel qu'une caméra ou un microscope, permettant d'acquérir des images d'une portion du plateau de support, par exemple pour calibrer la position de certaines têtes de modules de fabrication, comme décrit plus en détails ci-après.

En référence aux figures 7 à 9, on va maintenant décrire plus en détails les moyens de couplage entre une station d'accueil 11 et une tête de fabrication 12 de module de fabrication 10 d'une part, et entre une tête de fabrication 12 de module et le chariot mobile 31 d'autre part.

De préférence, les moyens de couplage mécanique entre d'une part une station d'accueil 11 et une tête de fabrication 12, et d'autre part entre le chariot 31 et une tête de fabrication 12, sont électromagnétiques, pour une capture rapide et afin d'éviter une usure des pièces. Ainsi, chaque station d'accueil 11 ainsi que le chariot 31 comprennent avantageusement une ventouse magnétique 510, 511 commandée (i.e. un électroaimant), et la tête de fabrication 12 comprend, sur deux faces opposées, une contre-plaque 512 réalisée dans un matériau magnétique sur lequel le champ magnétique généré par la ventouse peut résulter en une force magnétique.

Dans des modes de réalisation, la station d'accueil 10 et la tête de fabrication 12 d'une part, et le chariot 31 et la tête 12 d'autre part, peuvent comprendre des moyens de guidage et de contrôle de l'alignement des pièces. Par exemple, la station d'accueil 11 peut comprendre une fourche comprenant au moins deux axes 520 adaptés pour être reçus dans des alésages 521 correspondants de la tête 12 de fabrication d'un module. Inversement, la tête de fabrication 12 d'un module peut également porter une fourche dont les axes sont reçus dans des alésages de la station d'accueil. De même, le chariot 31 peut comprendre une fourche comprenant au moins deux axes 522 reçus dans des alésages 523 correspondants de la tête d'impression, ou inversement.

Dans un mode de réalisation préféré représenté sur la figure 7, les fourches sont portées par la station d'accueil 11 et le chariot 31, et la tête 12 de fabrication comprend des alésages traversants 521, 523 adaptés pour recevoir d'un côté les axes 520 de la fourche portée par la station d'accueil 11, et du côté opposé les axes 522 de la fourche portée par le chariot 31. En effet, dans ce cas, un des axes de la station d'accueil et du chariot peut être creux, et un ensemble émetteur 524 /récepteur optique 525 peut être installé dans ces axes creux, ce qui permet de confirmer l'alignement du chariot par rapport au module lorsqu'il vient récupérer ou déposer une tête d'impression dans sa station d'accueil. Par exemple, une diode laser infrarouge 524 peut être positionnée au fond de l'axe creux de la station d'accueil, et une photodiode infrarouge 525 peut être positionnée au fond de l'axe creux en face sur le chariot 31, la détection de la lumière de la diode par la photodiode permettant de confirmer l'alignement du chariot 31, de la tête et de la station d'accueil.

Chaque tête 12 de fabrication comprend également, sur deux faces opposées, des contacts électriques (non représentés) adaptés pour coopérer avec des contacts électriques 531, 532 d'une part de la station d'accueil et d'autre part du chariot 31, ces contacts électriques permettant d'alimenter électriquement, respectivement par la station d'accueil 11 ou par le chariot 31, des composants contenus dans la tête de fabrication 12. Par exemple, dans le cas d'un module 10 d'impression par dépôt de fil fondu, la tête de fabrication 12, ci-après nommée tête d'impression, comprend un élément chauffant pour faire fondre le fil, et cet élément chauffant est alimenté électriquement grâce aux contacts électriques. Le chariot 31 est quant à lui connecté au contrôleur principal 41, par exemple par une liaison filaire, pour la réception d'instructions du contrôleur principal 41 pour déplacer la tête de fabrication 12, mais également pour transmettre des instructions de commande de la tête de fabrication 12. Dans des modes de réalisation, et comme représenté schématiquement sur la figure 1, les têtes de fabrication 12 de certains modules de fabrication peuvent également comprendre une carte électronique comprenant un contrôleur 129, qui est configuré pour recevoir des instructions et pour piloter des composants électroniques conformément aux instructions reçues, notamment en appliquant des paramètres de contrôle figurant dans les instructions (par exemple : vitesse de ventilateur, température de chauffe, etc.). Le cas échéant, les contacts électriques des têtes de fabrication 12, stations d'accueil 11 et du chariot mobile 31, sont également adaptés pour permettre la transmission d'instructions, soit de la station d'accueil 11, soit du contrôleur principal 41 par l'intermédiaire du chariot, selon respectivement que la tête de fabrication est connectée à la station d'accueil ou au chariot.

En considérant une station d'accueil d'un module de fabrication 10, les moyens de couplage à une tête de module, i.e. couplage magnétique, mécanique et/ou électrique sont agencés sur une face de la station d'accueil différente de, et avantageusement opposée à, la face portant les connecteurs mécaniques et électriques permettant à la station d'accueil d'être montée sur l'emplacement de module du bâti de la machine.

En référence à la figure 8, le chariot 31 comprend au moins un moteur 311 et un organe de couplage 312, typiquement un crabot, avec un axe de sortie du moteur. Certaines têtes 12 de modules 10 de fabrication, selon leur fonction, peuvent comporter des pièces mobiles pouvant être entrainées par un moteur, et dans ce cas elles comprennent avantageusement un organe de couplage adapté pour coopérer avec celui 312 du chariot 31 pour pouvoir assurer un entrainement de pièces de la tête par le moteur du chariot. Dans ce cas également, et en référence à la figure 9, la station d'accueil 11 du module peut également comprendre un moteur 111 et un organe de couplage 112, et une face opposée de la tête du module comprend également un organe de couplage (non représenté) adapté pour coopérer avec celui de la station. Ainsi, la mise en oeuvre de pièces mécaniques mobiles de la tête de fabrication 12 peut être assurée par la station d'accueil 11 ou par le chariot 31, selon que la tête de fabrication 12 est assemblée à l'une ou à l'autre.

En référence aux figures 8 et 2, dans un mode de réalisation dans lequel la machine 1 comprend deux alignements 26 d'emplacements 25 de modules parallèles et disposés de part et d'autre du plateau de support 24, le chariot mobile 31 présente une configuration symétrique permettant de s'accoupler avec une tête de fabrication 12 des modules 10 des deux alignements. Dans ce cas, le chariot mobile 31 comprend deux moteurs 311 et comprend, sur deux faces opposées, selon la direction X, c'est-à-dire les faces qui viennent en regard des têtes 12 des modules de fabrication, les éléments de couplage décrits ci-avant, i.e. ventouse magnétique 511, fourche ou alésages, connecteurs électriques 532, organe de couplage moteur 312. Le capteur optique mentionné ci-avant peut être positionné au centre du chariot. Le chariot 31 peut également comprendre des encodeurs pour détecter la position des moteurs ainsi que des ventilateurs pour le refroidissement de chaque moteur et le refroidissement du matériau déposé, le cas échéant.

En référence aux figures 9 et 10, on va maintenant décrire des modes de réalisation d'un module d'impression 10 par dépôt de fil fondu. En complément de la description qui précède concernant tout type de module de fabrication, la tête d'impression 12 d'un module d'impression par dépôt de fil fondu comprend une buse 120, dont le diamètre est constant et déterminé, et un élément chauffant 121 permettant de fondre le filament avant de le déposer. De plus, la station d'accueil 11 est configurée pour alimenter la tête d'impression 12 en filament à partir d'une bobine 13 de filament. A cet égard, la machine modulaire 1 comprend a minima autant d'emplacements pour des bobines 13 de filaments que d'emplacements pour des modules de fabrication, les emplacements pour les bobines étant de préférence positionnés sous les emplacements des modules. Certains de ces emplacements peuvent être équipés pour le conditionnement des bobines de filament par le contrôle de la température et de l'hygrométrie. Comme représenté sur la figure 10, cette configuration permet de faire passer le filament dans un canal interne 113 prévu à cet effet d'une station d'accueil 11 de module d'impression 10, le filament pénétrant dans le canal au niveau d'une paroi inférieure 114 de la station d'accueil, et émergeant de la station d'accueil au niveau d'une paroi supérieure 115, où il est supporté par une tige guide flexible 116 montée sur la station d'accueil, cette tige guide permettant de s'assurer que le filament ne tombe pas sur la zone d'impression et ne vienne pas former un obstacle sur le trajet du chariot ou d'une tête de fabrication 12. Les dimensions de la tige guide sont calculées pour permettre d'atteindre toutes les parties de la zone de travail du plateau de support 24, sans exercer une force de rappel qui serait trop importante et qui pourrait gêner la précision de la tête.

Le filament est ensuite introduit dans un canal interne 122 d'une tête d'impression 12, par exemple au niveau d'une face supérieure 123 de la tête, où il est acheminé jusqu'à la buse disposée sur une face inférieure 124 de la tête, face au plateau de support 25.

La machine 1 de fabrication comprend également un bac 14 de récupération des amorces ou des reliquats de filament disposés en-dessous des emplacements des modules. Ce bac peut être interposé entre les emplacements des modules 10 et les emplacements des bobines 13, en conservant un passage pour un filament entre chaque emplacement de bobine et chaque emplacement de module.

La station d'accueil 11 du module d'impression 10 est configurée pour alimenter la tête d'impression 12 en filament. A cet égard, et en référence à la figure 9, elle comprend un moteur 111 et un dispositif d'entraînement 117 du filament entrainé par le moteur. Avantageusement, un même moteur entraine l'organe de couplage 112 et le dispositif d'entrainement 117. Ce dispositif d'entrainement 117 est débrayable une fois le filament chargé dans la tête d'impression.

En outre, la station d'accueil 11 est configurée pour contrôler un ensemble de paramètres relatifs au filament et/ou à la consommation de filament par la tête d'impression 12, et comprendre à cet égard un ou plusieurs capteurs. Dans des modes de réalisation, la station d'accueil comprend au moins un capteur, par exemple un capteur optique 118, adapté pour détecter le filament, et pour détecter une rupture ou une absence de filament. La station d'accueil peut également comprendre un encodeur 119 adapté pour mesurer une longueur de filament déroulée. Le contrôleur secondaire 110 de la station d'accueil est configuré pour communiquer au contrôleur principal 41 la longueur de filament consommée mesurée par l'encodeur, ainsi que des alertes si un évènement de type rupture ou absence de filament est détecté. Le contrôleur principal 41 peut, à la réception d'une alerte sur une rupture ou une absence de filament, interrompre un processus de fabrication en cours (notamment en envoyant à la tête d'impression 12, via le chariot mobile, des instructions d'arrêt de la fabrication) et produire une alerte sur l'interface homme-machine à destination de l'opérateur. Le contrôleur principal 41 est également configuré pour comparer la longueur de filament consommée mesurée par l'encodeur avec une longueur théorique qui est déterminée en fonction de la géométrie de la pièce à produire, et générer une alerte en cas d'incohérence entre les deux.

La tête d'impression 12 comprend également un dispositif d'entrainement du filament 125, qui est entrainé, soit par le moteur de la station d'accueil, soit par le moteur du chariot, selon que la tête d'impression est montée sur l'une ou sur l'autre, par l'intermédiaire des organes de couplage prévus à cet effet est décrit ci-avant. Le dispositif de chauffage 121 est interposé entre le dispositif d'entrainement et la buse 120, permettant de fondre le filament au moment de son dépôt.

Avantageusement, la station d'accueil 11 d'un module 10 d'impression par dépôt de fil fondu est également adaptée pour réaliser le préchauffage et la précharge d'un filament dans la tête en temps masqué, c'est-à-dire pendant le fonctionnement d'un autre module de fabrication, en préparation du fonctionnement du module d'impression. Ainsi, lorsque la machine 1 met en oeuvre une séquence de fabrication impliquant le fonctionnement, successivement, de plusieurs modules de fabrication 10 dont un module d'impression par dépôt de fil fondu, le contrôleur principal 41 est configuré pour commander au contrôleur secondaire 110 de la station d'accueil 11 du module d'impression 10 cette préchauffe et précharge pendant le fonctionnement d'un module de fabrication précédent dans la séquence.

La station d'accueil 11 de certains modules de fabrication, et notamment des modules d'impression par dépôt de fil fondu, peut également être configurée pour nettoyer la tête de façon à éviter que des reliquats de matière ne se déposent sur la pièce en cours de fabrication. La station d'accueil peut à cet égard comprendre un dispositif de nettoyage (non représenté), statique ou non, motorisé ou non, qui est configuré pour nettoyer la tête lorsque celle-ci est replacée par le chariot mobile dans la station d'accueil ou quand elle est récupérée par le chariot mobile pour être utilisée.

Comme toutes les stations d'accueil de module de fabrication, la station d'accueil d'un module d'impression est configurée pour communiquer des informations de configuration au contrôleur principal lors d'une phase d'initialisation du module. En l'occurrence, ces informations de configuration peuvent comprendre un ensemble de paramètres de fonctionnement du module, comprenant par exemple une température de consigne pour la fusion du filament du module, une vitesse d'impression, un diamètre de la buse, une vitesse du ventilateur, une température d'attente, et un temps de chauffe etc.. A partir des informations de configuration transmises par les contrôleurs secondaires 110 des stations d'accueil, et d'une description d'une pièce à fabriquer, le contrôleur principal 41 est configuré pour générer une séquence d'instructions pour la fabrication de la pièce.

Lors du montage d'un module de fabrication sur le bâti, outre la transmission des informations de configuration au contrôleur principal, un calibrage de la position de la tête de fabrication du module, en position sur la station d'accueil, peut être nécessaire pour assurer que le chariot puisse se mettre directement en bonne position pour récupérer la tête du module. Ce calibrage en position comprend un calibrage selon les deux axes X, Y, la position en Z étant fixée par la géométrie de la machine. Ce calibrage en X et Y peut être mis en oeuvre comme suit :
- D'abord, un premier calibrage en Y peut être réalisé en effectuant un balayage selon l'axe Y du chariot devant le module, en utilisant les émetteur/récepteur optique décrits ci-avant. La position en Y de la tête est déterminée lorsque le récepteur optique du chariot détecte l'émetteur de la station d'accueil.
- Ensuite, le calibrage en X est obtenu par contact électrique. La machine positionne le chariot à la position en Y déterminée précédemment devant la tête du module, et déplace le chariot jusqu'à parvenir à un contact électrique. La position en X est alors déterminée comme celle représentant la compression à atteindre pour assurer le contact.

Un calibrage supplémentaire peut être mis en oeuvre pour certains modules de fabrication. Par exemple, la position en X et Y d'une buse par rapport à la tête d'impression n'étant pas forcément la même pour tous les modules d'impression, cette position peut être déterminée en imprimant un motif test et en utilisant le capteur d'images 310 du chariot pour déterminer les coordonnées de ce motif imprimé, et en déduire la position de la buse. D'autres outils comme un outil laser, une pointe à graver ou un module d'écriture peuvent faire l'objet d'une calibration analogue, en ayant toutefois préalablement installé un revêtement supplémentaire sur le plateau support pour ne pas laisser de trace durable sur celui-ci.

La machine modulaire décrite ci-avant permet donc la mise en oeuvre de procédés de fabrication de pièces impliquant l'intervention successive d'outils variés, i.e. comprenant au moins deux étapes de fabrication impliquant deux modules de fabrication différents. Entre chaque étape de fabrication, le chariot vient remettre la tête de fabrication utilisée dans la station d'accueil correspondante et récupérer ensuite la tête de fabrication nécessaire à la mise en oeuvre de l'étape suivante.

A titre d'exemple non limitatif, une séquence de fabrication d'un objet peut comprendre :
- une première étape d'impression par dépôt de fil fondu avec un premier module d'impression, par exemple d'une première couleur, matière, et/ou d'un premier diamètre d'impression,
- une deuxième étape d'impression par dépôt de fil fondu avec un deuxième module d'impression, par exemple d'une deuxième couleur, matière, et/ou d'un deuxième diamètre d'impression,
- une troisième étape de gravure de certaines zones de la pièce, avec un module de gravure,
- Une quatrième étape de contrôle avec un module de mesure dimensionnel.

Liste des références numériques :
- 1 : Machine modulaire
- 10 : Module
- 11 : station d'accueil
- 110 : contrôleur secondaire
- 111 : moteur
- 113 : canal interne
- 114 : paroi inférieure
- 115 : paroi supérieure
- 116 : tige guide
- 117 : dispositif d'entrainement de filament
- 118 : capteur optique
- 119 : encodeur
- 12 : tête de fabrication
- 120 : buse
- 121 : élément chauffant
- 122 : canal interne
- 123 : face supérieure
- 124 : face inférieure
- 125 : dispositif d'entrainement de filament
- 129 : contrôleur
- 13 : bobine
- 14 : bac de récupération de filament
- 20 : bâti
- 21 : enceinte
- 22 : paroi périphérique
- 220 : ouverture
- 23 : paroi supérieure
- 24 : plateau de support
- 25 : emplacement de module
- 250 : connecteur mécanique
- 251 : connecteur électrique
- 252 : carte électronique,
- 253 : connecteur supplémentaire
- 26 : alignement d'emplacements
- 30 : dispositif de déplacement
- 31 : chariot mobile
- 310 : capteur d'images
- 311 : moteur
- 312 : organe de couplage
- 32 : bras
- 320 : pièce longitudinale
- 321 : pièce d'extrémité
- 322 : logement longitudinal
- 323 : tige longitudinale
- 324 : poulie de guidage
- 325 : galet
- 326 : montant de pièce d'extrémité
- 327 : base de pièce d'extrémité
- 33,33' : courroie
- 34 : moteur d'entrainement de courroie
- 35 : rail
- 40 : ordinateur
- 41 : contrôleur principal
- 42 : mémoire
- 43 : interface utilisateur
- 510, 511 : ventouse magnétique
- 512 : contre-plaque magnétique
- 520, 522 : axes de fourche
- 521, 523 : alésages
- 524 : émetteur optique
- 525 : récepteur optique
- 531, 532 : contacts électriques

## Revendications

1. Machine modulaire (1) pour la fabrication d'objets par addition, soustraction ou transformation de matière, comprenant :
- un bâti (20),
- un plateau de support (24) d'un objet à fabriquer,
- au moins un module de fabrication (10), chaque module de fabrication comprenant une station d'accueil (11) et une tête de fabrication (12) amovible par rapport à la station d'accueil,
- un dispositif de déplacement (30) d'une tête de fabrication (12) relativement au plateau de support (24), et
- un contrôleur principal (41), configuré pour commander le dispositif de déplacement,
**caractérisée en ce que** chaque station d'accueil (11) de module de fabrication comprend un contrôleur secondaire (110), le bâti comprend une pluralité d'emplacements (25) pour des modules de fabrication,
et **en ce que** chaque station d'accueil (11) de module et chaque emplacement (25) sont adaptés pour permettre le montage d'une station d'accueil de manière amovible dans l'un quelconque des emplacements du bâti, et pour établir une communication entre le contrôleur secondaire de la station d'accueil et le contrôleur principal lorsque la station d'accueil est montée dans un emplacement du bâti.

2. Machine modulaire selon la revendication 1, dans laquelle chaque station d'accueil d'un module de fabrication comprend une mémoire stockant des informations de configuration du module de fabrication, et le contrôleur secondaire est configuré pour transmettre lesdites informations de configuration au contrôleur principal lors d'une phase d'initialisation du module de fabrication.

3. Machine modulaire (1) selon la revendication 1 ou 2, dans laquelle chaque station d'accueil (11) comprend un capteur de présence de la tête de fabrication amovible, et le contrôleur secondaire (110) est configuré pour communiquer un état de présence ou d'absence de la tête de fabrication amovible au contrôleur principal (41).

4. Machine modulaire (1) selon l'une des revendications précédentes, dans laquelle le dispositif de déplacement (30) comprend un chariot mobile (31) dans un plan parallèle au plateau de support (24), le chariot comprenant des moyens de connexion mécanique et électrique (522, 532) avec une tête de fabrication, un moteur (311), et un crabot (312) entrainé par le moteur.

5. Machine modulaire (1) selon l'une des revendications précédentes, comprenant deux alignements (26) d'emplacements (25) des modules de fabrication, disposés parallèlement l'un à l'autre, de part et d'autre du plateau de support (24) de l'objet à fabriquer.

6. Machine modulaire (1) selon la revendication précédente, dans laquelle le dispositif de déplacement (30) d'une tête de fabrication (12) comprend un bras mobile (32) en translation dans une direction parallèle aux alignements (26) des emplacements des modules, et un chariot mobile (31) en translation dans le bras, dans une direction perpendiculaire à la direction de déplacement du bras, le chariot (31) comprenant des moyens de préhension (511) amovible d'une tête (12) de fabrication d'un module, disposés de part et d'autre du chariot dans sa direction de déplacement.

7. Machine modulaire (1) selon l'une des revendications précédentes, dans laquelle le dispositif de déplacement (30) d'une tête de fabrication (12) comprend un chariot mobile (31) dans un plan parallèle au plateau de support (24), et au moins une courroie de déplacement (33,33') du chariot mobile (31) définissant un contour fermé, et les emplacements (25) pour les modules de fabrication sont situés à l'intérieur du contour défini par la courroie.

8. Machine modulaire (1) selon l'une des revendications précédentes, comprenant au moins un module d'impression par dépôt de fil fondu, dont la station d'accueil est configurée pour alimenter la tête en filament, et la tête comprend un dispositif de chauffage du fil (121), et une buse de dépôt (120).

9. Machine modulaire (1) selon la revendication 8, dans laquelle le contrôleur secondaire (110) de la station d'accueil (11) du module d'impression par dépôt de fil fondu est configuré pour transmettre au contrôleur principal (41) une information relative à une longueur de filament consommée et/ou une alerte relative à un évènement de type rupture ou absence de filament.

10. Machine modulaire (1) selon l'une des revendications 8 ou 9, dans laquelle le contrôleur principal (41) est configuré pour commander la mise en oeuvre d'une séquence de fabrication impliquant le fonctionnement, successivement, d'un premier module de fabrication et du module d'impression par dépôt de fil fondu, et la station d'accueil du module d'impression par dépôt de fil fondu est en outre configurée, à réception d'instructions du contrôleur principal, pour préchauffer et précharger en filament la tête d'impression, pendant le fonctionnement du premier module de fabrication.

11. Machine modulaire (1) selon l'une des revendications précédentes, comprenant en outre au moins un module de fabrication (10) parmi le groupe suivant :
- Module d'écriture,
- Module de fraisage
- Module de dépôt liquide,
- Module de découpe,
- Module laser,
- Module de préhension et de dépôt,
- Module d'injection de matière,
- Module de mesure dimensionnel,
- Module de gravure,
- Module de lissage,
- Module de dépôt à fibres continues,
- Module de dépôt et polymérisation de résine.

12. Module (10) de fabrication adapté pour être utilisé dans une machine selon l'une quelconque des revendications précédentes, le module de fabrication (10) comprenant une station d'accueil (11) et une tête de fabrication (12) amovible par rapport à la station d'accueil, dans lequel la station d'accueil (11) comprend un contrôleur (110), et des moyens de connexion adaptés pour permettre son montage sur le bâti de la machine de façon amovible.

13. Module (10) de fabrication selon la revendication 12, dans lequel la station d'accueil (11) comprend un moteur (111) et un organe de couplage (112) avec un axe de sortie du moteur, et la tête de fabrication (12) comprend des pièces mécaniques mobiles et un organe de couplage adapté pour coopérer avec l'organe de couplage de la station d'accueil et pour entrainer en mouvement les pièces mécaniques mobiles une fois le couplage réalisé.

14. Module (10) de fabrication selon l'une des revendications 12 ou 13, pour l'impression par dépôt de fil fondu, dans lequel la station d'accueil (11) est configurée pour alimenter la tête (12) en filament, et la tête (12) comprend un dispositif de chauffage (121) du filament et une buse de dépôt (120).

15. Module (10) selon la revendication précédente, dans lequel la station d'accueil (11) comprend en outre au moins un capteur adapté pour détecter une rupture ou une absence de filament, et/ou pour mesurer une longueur de filament consommée.
